# EUROPEAN PATENT SPECIFICATION

(11) **EP 2 835 631 B1**
(45) Date of publication and mention of the grant of the patent: **24.02.2016**
(21) Application number: 14002662.6
(22) Date of filing: 30.07.2014
(51) Int. Cl.: G01N 23/04

(54) **A multi-axial apparatus for carrying out x-ray measurements, particularly computed tomography**
Multi-axiale Vorrichtung zur Durchführung von Röntgenmessungen, insbesondere Computertomogrphie
Appareil multi-axial pour effectuer des mesures aux rayons X, en particulier tomographie calculée

(30) Priority: 05.08.2013 CZ 20130607
(43) Date of publication of application: 11.02.2015
(73) Proprietor: Ustav teoretické a aplikované mechaniky AV CR, v.v.i., 190 00 Praha 9 (CZ)
(72) Inventor: Fíla, Tomás, 267 29 Zadní Treban (CZ); Vavrik, Daniel, 190 00 Praha 9 (CZ)
(74) Representative: Sedlák, Jirí

(56) References cited:
- WO-A1-2012/171029
- US-A1- 2007 140 412
- US-A1- 2012 257 713
- C. T. BADEA ET AL: "A dual micro-CT system for small animal imaging", PROCEEDINGS OF SPIE, vol. 6913, 6 March 2008 (2008-03-06), page 691342, XP055158068, ISSN: 0277-786X, DOI: 10.1117/12.772303

## Description

### Field of the invention

The invention relates to a multi-axis apparatus for X-ray measurements, particularly computed tomography, during which X-rays are used for the imaging of measured objects and for creating digitized models of the structure of objects using computed tomography method.

### Background of the invention

Currently there are a number of devices allowing radiographic measurements and computed tomography (CT) of an examined object. These devices find the widest application in medicine where they have become an invaluable diagnostic tool. Techniques for inspecting an object with X-rays, however, are being increasingly applied in industrial and research sectors where they are used e.g. for the nondestructive inspection of materials and structures, for final inspection of products, or for creating 3D models of examined subjects and their internal structure. The principles of X-ray imaging devices are similar as in medicine.

Efforts to accelerate measurements and improve the results of CT recently led to the development of devices with multiple X-ray sources (usually two sources); these known devices can be divided into two groups: devices based on the DSCT principle (Dual Source CT) and the DECT principle (Dual Energy CT). DSCT is a scanning technique using two sources operating at the same anode voltage and two detectors. The required measuring time is reduced by approximately a half compared to using a single source. DECT is a technique of scanning using two measurements operating at different anode voltages. The examined object is thus affected by radiation with different energies. This arrangement allows for better distinction and the identification of the internal structure of the examined object with higher contrast, comprising parts having different attenuation of radiation (in medicine, e.g. bone, blood vessels, adipose tissue). Medical equipment operating on these principles are known and their various versions can be found in patent applications and granted patents such as US 5966422, US 20120082289, US 20040213371, EP 0231037, US 7473901, US 7440547, US 7016455, US 7970096, US 20120269317, US 20120236987, EP 0231037, US 6869217, WO 2013032172, US 8308361, and US 4982415. The DE measuring method (dual energy) is also used in X-ray methods other than solely CT, see, e.g. the granted European patent EP 1380260.

For CT measurement in industrial and research applications, an inverted arrangement of constituent elements is usually applied as opposed to medical applications. While in medical tomography the X-ray source and detector rotate around the patient, in industrial use the preferable arrangement is one in which the examined object is placed on a turning rotary stage and is irradiated by one X-ray source (generally with a conical shaped X-ray beam) and imaged by one detector. The X-ray tube and the detector can be moved along at least one axis common with the rotary stage. This arrangement allows setting the final imaging geometry of the device and thus affecting the field of view and zoom. X-ray measurements in this arrangement reach a high degree of accuracy and are used to measure in high resolution (micrometers). The disadvantages of this design consist in the fact that the DSCT cannot be utilized at all (only one X-ray source is available) and DECT method cannot be applied in real time (DECT measurements must be carried out twice, first at one energy, then at the second energy). DSCT and DECT methods are also used in industry, but using devices with similar design as described in the preceding paragraph. Further disadvantage of such designs lie in the fact that when carrying out DSCT or DECT (in real time with simultaneous irradiation from two sources), the radiation sources and detectors rotate around a stationary positioned object. This makes it impossible to set a variable imaging geometry and limits the scope of the resolution and possible object dimensions.

Micro-CT system with two pairs of X-ray source and detector is known from scientific paper titled "A dual micro-CT system for small animal imaging" by C.T. Badea, S. Johnson, M. Lin, L.W. Hedlund and G. Allan Johnson. The disadvantages of this design consist in the fact that geometry of each pair of X-ray source and detector is fixed and the system is designed for small objects like hearts of mice.

Among present known solution also belongs "Excised specimen imaging using a combined PET and micro CT scanner" described in the application WO 2012/171029, ""Non-destructive analysis of an object" described in the application US 2012/0257713, and "Method and apparatus for facilitating enhanced CT scanning" described in the application US 2007/0140412. The disadvantages of these designs lie in the fact that presented solutions are not capable of working with two pairs of X-ray and detector with different operational parameters simultaneously.

The task of the submitted invention is the creation of an apparatus for carrying out radiological measurements, particularly computed tomography, which would enable measurements using DSCT or DECT methods in real time with the same variability of the geometry settings and magnification as in the standard configuration with the rotation of the examined object.

### Summary of the invention

This task is resolved by the creation of a multi-axis apparatus for performing X-ray measurements, particularly computed tomography, according to the submitted invention.

The multi-axis apparatus for performing X-ray measurements, particularly computed tomography, comprises a positioning means for moving at least one X-ray tube and at least one detector on the opposite ends of a common rotational axis passing through the rotary stage for rotational positioning of the measured object.

The essence of the invention consists in that it comprises two pairs of X-ray tubes and a detector, wherein the first pair is formed by a first X-ray tube and first detector on a common axis, and the second pair is formed by a second X-ray tube and a second detector on a common axis, wherein the virtual axes of the two pairs intersect perpendicularly. The positioning means is lying in the horizontal plane of perpendicular virtual axis. In the positioning means, the first X-ray tube is arranged with the ability to shift on the first linear X-ray tube mechanical axis, and the second X-ray tube is arranged with the ability to shift on the second linear X-ray tube mechanical axis, where the X-ray tube mechanical axes are horizontal, non-intersecting and perpendicular. The first detector is arranged with the ability to shift on the first linear detector mechanical axis, the second detector is arranged with the possibility to shift on the horizontal correction mechanical axis perpendicular to the second X-ray tube mechanical axis, and the linear correction mechanical axis is arranged with the ability to shift on the second detector mechanical axis on which the rotary stage is mounted with the possibility to shift, wherein the linear translation detector mechanical axes mounted on a positioning mechanical axis parallel to the second X-ray tube mechanical axis are horizontal and parallel to the first X-ray tube mechanical axis.

The advantages of this design lie in the arrangement of two pairs of X-ray tube sources into a rectangular cross. In the middle of this assembly is positioned a rotary stage on which the target object is placed. The positioning system device is designed so that it is always possible to simultaneously irradiate an object with both X-ray tubes, wherein the geometry settings on both major virtual axes are completely independent of each other. Both X-ray tubes and both detectors can move in two directions of translation, while the rotation stage can move in two directions of translation and one direction of rotation, resulting in a higher variability of geometry settings and in particular the fact that double the range of distances between the X-ray tube and the rotary stage and between the rotary stage and detector is achieved. This doubles the magnification range than that which would be obtained by the arrangement of the two axes in a simple cross with the stationary position of the rotary stage in the middle of the assembly. The floor area of the device is used more efficiently.

In another preferred embodiment of the multi-axis apparatus for performing X-ray measurement according to the present invention, the first detector is arranged with the ability to shift on the first vertical axis which is arranged with the ability to shift on the first detector mechanical axis, and the second detector is arranged with the ability to shift on the second vertical axis which is arranged with the ability to shift on the correction mechanical axis, wherein the first and second X-ray tubes are height adjustable. The vertical positioning of the detectors and X-ray tubes allows for better setting of the measurement geometry, especially for objects with larger height dimensions.

In another preferred embodiment of the multi-axis apparatus for performing X-ray measurements according to this invention, the detectors are mounted to the vertical axis with the ability to tilt from a vertical position using a tilting mechanism. Tilting the detector is advantageous for precise adjustment of the verticality of the detector.

In another preferred embodiment of the multi-axis device for performing X-ray measurements according to this invention, the tilting mechanism comprises both detectors from the radial-axial bearing mounted to the vertical axis and from a plate with mounts for detectors, further from the actuator mounted on the panel performing the tilt of the detector and from the tension spring to ensure stability and preload of the mechanism tilting the detector. The tilting mechanism is structurally simple, easy to set, while it holds the detector without moving so there is no distortion in the measurement.

In another preferred embodiment of the multi-axis device for performing X-ray measurements according to this invention, the fastening plates for supporting the detector are equipped with a attachment for easy replacement of different detector types. Various types of measurements require different detectors, which can be simply exchanged without having to disassemble the entire tilting mechanism.

In another preferred embodiment of the multi-axis device for performing X-ray measurements according to this invention, the X-ray tubes are provided with an additional device with a rotating disc which is equipped with at least one filter for shaping the spectrum of the X-ray beam. The radiation beam needs to be properly calibrated so that an accurate measurement can be taken. Objects of different materials or of different shapes require specific adjustment of the spectrum of the X-ray beam.

In another preferred embodiment of the multi-axis device for performing X-ray measurements according to this invention, the rotary stage is adjustable in height. This is useful when measuring small or large objects that would cause a problem with setting the measured object into a common axis of the X-ray tube and detector pair.

The advantage of the invention is to enable the measurement of objects using DSCT and DECT X-ray technology to scan in real time while maintaining the variability of geometry settings and resolution as in the standard configuration with the rotation of the object being examined. The invention is primarily to allow a CT of objects in high resolution, where one pixel of the detector records in the order of micrometers of the real object, using both of these mentioned techniques.

### Brief descrption of drawings

- Fig. 1 -: basic diagram of movements of the apparatus according to the invention in a plane view
- Fig. 2 -: basic diagram of movements of the apparatus according to the invention in oblique view from above
- Fig. 3 -: diagram of the arrangement of the positioning system of the entire assembly
- Fig. 4 -: isometric view of the entire assembly

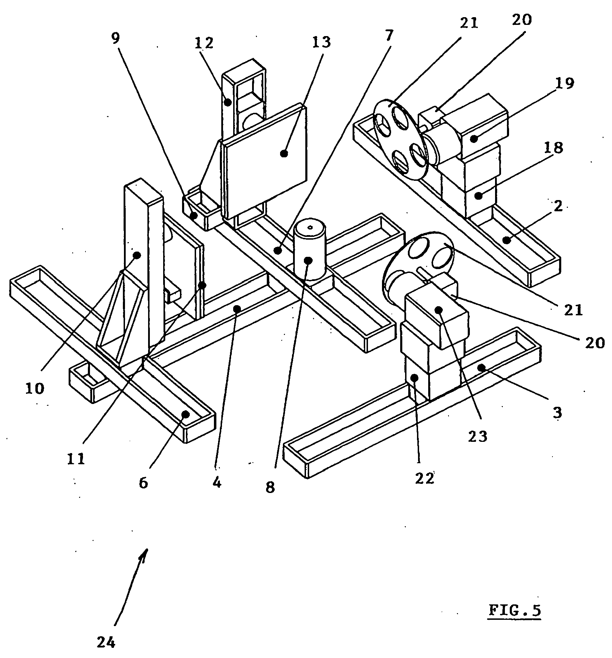

- Fig. 5 -: simplified diagram of the arrangement of the positioning system the whole assembly

### Examples of the preferred embodiments of the invention

It should be understood that the hereinafter described and illustrated specific examples of the realization of the invention are presented for illustrative purposes and not as a limitation of the examples of the realization of the invention to the cases shown herein. Experts who are familiar with the state of technology shall find, or using routine experimentation will be able to determine, a greater or lesser number of equivalents to the specific realizations of the invention which are specifically described here.

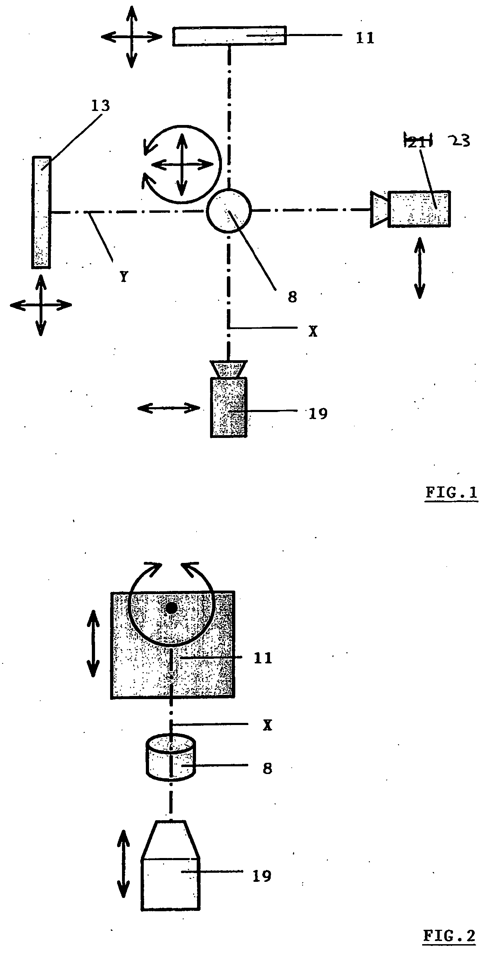

Figure 1 shows a diagram of the movement of the multi-axis apparatus **24** in a plane view. Both X-ray tubes **19** and **23** move in one basic direction, the detectors **11** and **13** and the rotary stage **8** move in two basic directions along paired axes **X** and **Y** of a Cartesian cross, which are perpendicular to each other. The rotary stage **8** is further rotated about its center and can be adjustable in height.

Figure 2 shows a basic diagram of the movements from an oblique top view for one pair of the first X-ray tube **19** and the first detector **11** of the apparatus **24.** The first X-ray tube **19** and the first detector **11** are moved vertically, while the detector **11** can also be tilted sideways. The same possibilities of movement apply to the second pair of the second X-ray tube **23** and the second detector **13**.

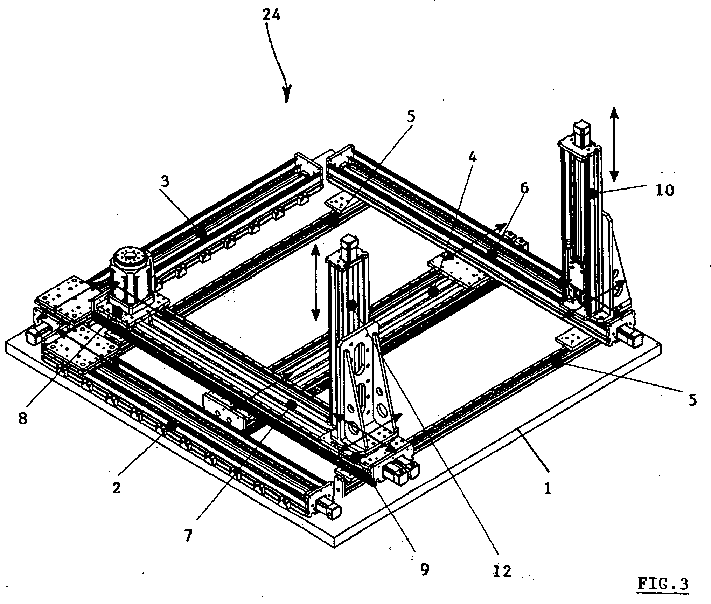

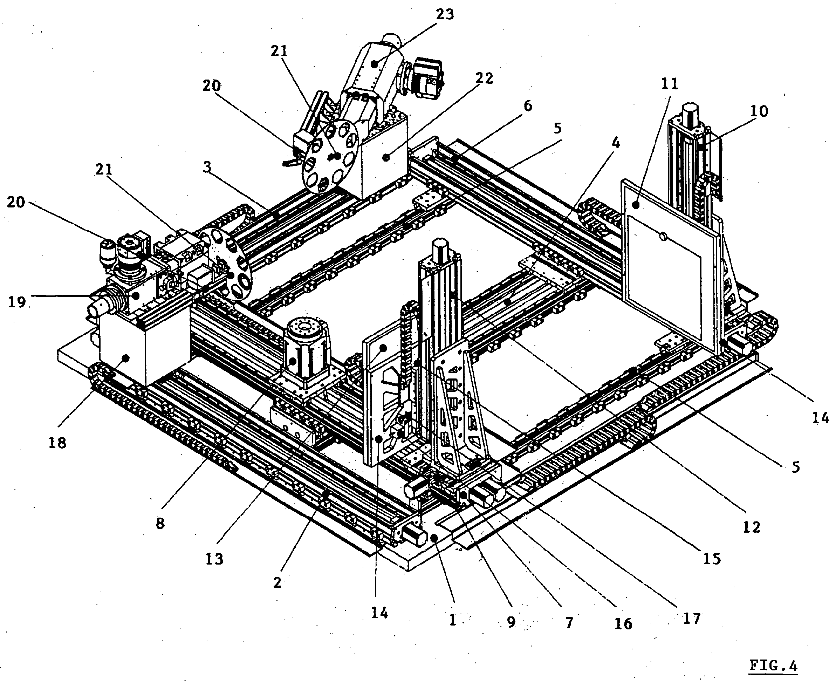

Figure 3 shows an unfitted multi-axis device **24** which is positioned on the plate of the anti-vibration table **1**. The mechanical axes **2**, **3, 4, 6, 7, 9, 10** and **12** form a single line for transversal movement. Figure 4 shows the apparatus **24** equipped with detectors **11**, **13,** X-ray tubes **19, 23** and devices **20** for positioning discs **21** with filters for the X-ray beam. The devices **20** are not fixed parts of the X-ray tubes **19, 23** but are detachable and can be replaced by other devices not shown. On the anti-vibration table **1** there is placed the entire assembly device **24,** therefore the measurement is not affected by vibrations of the environment, e.g. from the floor of the room, etc. The anti-vibration table **1** is fitted with a mesh of threaded holes which are used for attachment of all the mechanical axes **2, 3**, **4** situated at the lowest level in the assembly. With each line lying in mechanical axes **2, 3, 4, 6, 7, 9, 10, 12,** i.e. with the exception of the non-depicted axes of the tilt of detectors **11** and **13** formed by stepper actuators **16** and jacks **18** and **22** of X-ray tubes **19** and **23,** an integral frame is formed from extruded aluminum alloy, in which a pair of linear guide rails and a ball screw is placed, or possibly a pair of ball screws. The ball screw is connected through a flexible coupling with zero backlash to a stepper motor. Part of each lead lying in the mechanical axes **2**, **3**, **4**, **6**, **7**, **9**, **10** and **12** is the energy chain for bringing power, safety circuits, and data cables to the individual elements of the assembly, limit switches, and a system for measuring the absolute position of the individual elements of the assembly. This, in real-time without the need for further reference, indicates the exact absolute position of the entire assembly. This feature is used for operating the assembly and for the precise detection of the geometric relationships between the individual elements of the assembly, a knowledge of which is essential for precise reconstruction of the scanned projection. All nuts for the ball screws are preloaded and their pitch, together with the stepping motor and its operation, are chosen so as to achieve the maximum positioning accuracy in the order of micrometer units.

On the anti-vibration table **1** there are bolted the tracks of X-ray tube mechanical axes **2** and **3** of the lateral movement of the X-ray tubes **19** and **23** and the bottom floor of the main cross formed by positioning mechanical axis **4** located in the center and equipped with two ball screws. Due to the large span, the lower floor of the apparatus **24** is equipped with two supporting linear guide rails **5.** On the lower floor are located the detector mechanical axles **6** and **7.** The mechanical axis **7** is designed for positioning the rotary stage **8** and correction mechanical axis **9.** On the mechanical axis **6** is placed the first vertical axis **10** for securing the vertical movement of one of the detectors **11**. The precise rotary stage **8** is equipped with an air bearing and is capable of positioning with repeatability of positioning within <1 arcsec and positioning accuracy of 2 arcsec. The parameters of the stage **8** guarantee the accuracy of rotation and allow for the collection of data for tomographic reconstruction at the highest resolution.

The correction mechanical axis **9** allows for fine side correction of the position of the detector **13** to the rotary stage **8.** The correction mechanical axis for the detector mechanical axis **6** is not necessary, since this correction can be carried out at a sufficient accuracy directly by movement along the detector mechanical axis **6.** On the correction mechanical axis **9** there is located a second vertical axis **12** for vertical positioning of the second detector **13**. Both detectors **11** and **13** are mounted on the panel **14** with universal mounts.

The versatility of the panel **14** allows for the advantageous and arbitrary change, in the assembly, the kinds of detectors **11** and **13** and for the attachment of both independent directions of detectors **11** and **13,** which are most suitable for making measurements. The panel **14** is, in the vertical axis **12,** fastened using a radial-axial bearing **15.** This bearing **15** allows for the tilt of detector **11** and **13**. The system of tilting is motorized using a stepper actuator **16**. From the stepper actuator **16** there is extended a trapezoidal screw with a rounded end. This rests on its counterpart in the shift of axis **12.** Ejecting the screw of the actuator **16** allows for the tilting of the detector **11** and **13.** The contact of the shaft of the trapezoidal screw of the stepper actuator **16** and its counterpart is secured by the preload of the tension spring **17.**

On X-ray tube mechanical axes **2, 3** for the lateral movement of the X-ray tubes **19** and **23** there is positioned a vertical jack of **18** and **22.** The lift of jacks **18** and **22** is implemented using the exact trapezoidal screw driven via a toothed belt by the stepper motor. The precision of positioning of jacks **18** and **22** is, due to the drive via toothed belt, lower than for the mechanical axes **2, 3, 4, 6, 7, 9, 10, 12** equipped with a ball screw, to the order of hundredths of a mm.

The load bearing capacity of jacks **18** and **22** reaches 100 kg and thus allows for the lift of powerful X-ray tubes **19** and **23,** weighing about 65 kg. The lower accuracy of positioning on the jack **18** and **22** is compensated by vertical axes **10** and **12** of the detectors. First, the height position of X-ray tubes **19** and **23** is set less accurately, and then the relative position of detector **11** and **13** and X-ray tube **19** and **23** are fine adjusted on the precise axes **10** and **12**. The jack **18** and **22** is also equipped with limit switches and a device for sensing absolute position using magnetic tape. The top plate of the jack **18** is equipped with a micro-focus X-ray tube **19** with the ability to continuously adjust the parameters of the X-rays (anode voltage of 10-160kV) and a device **20** for positioning the disc **21** with filters for the X-ray beam used for the beam hardening correction and shaping the spectrum of the X-ray beam. On axis **3** for lateral movement of the X-ray tube, there is placed a jack **22** of X-ray tube **23**. The jack **22** is identical to jack **18.** On the top plate of the jack **22** there is mounted an X-ray tube **23** with the ability for continuous adjustment of the parameters of X-rays. The X-ray tube **23** is more powerful than the X-ray tube **19** and can reach a higher anode voltage (10-240kV). The difference in power of the two X-ray tubes **19** and **23** and the replaceability of additional exchange of its leading (radiating) parts allow for a high variability of measurements using DSCT and DECT techniques. On the upper plate of the jack **22** there is also located a device **24** for positioning the disc **25** with samples of material for its shaping. The devices **20** are mounted on a pivot arm and can be easily folded in the case of measurements that do not require shaping of the spectrum of the beam. The discs **21** are interchangeable and easily replaceable.

The apparatus **24** is equipped with two different X-ray tubes **19, 23,** i.e. two different industrial sources of X-rays that allow for the arbitrary setting of energy radiation within its parameters, thus enabling measuring using DSCT and DECT technology across the entire energy spectrum. At the same time, due to the variability and independence of geometry settings on both main directions, it is possible to detect one object simultaneously with two completely different settings of all parameters. Thus it is possible, for example, on the first detector **11** to record radiograms with a different magnification than on the second detector **13.** The suspension system of the detector **11** and **13** is preferably designed so that several kinds of detectors can be placed on the tilting plate **14,** i.e. that the tilting mechanism and the other positioning is not firmly connected to the detector **11** and **13** and it can be easily removed from the assembly, and then detector **11** and **13** used with the most suitable parameters for the respective application. X-ray tubes **19, 23** are preferably equipped with a device for measuring the correction of the X-ray beam hardening and for shaping of the X-ray beam spectrum.

### Industrial applicability

The apparatus according to the invention can be used for carrying out micro-radiographic measurements using DECT and DSCT technology in real time. The invention allows for e.g. the acceleration of the micro-tomographic data acquisition using two X-ray tubes and simultaneous scanning of the sample from two different projection angles, , carrying out real time high resolution DECT measurements, , or simultaneous scanning of a sample at two completely different irradiation geometries. Another option is the simultaneous overview tomography and tomography of the volume of interest, or the monitoring of fast processes in overview and in detail.

### Overview of the positions used in the drawings

- 1: anti-vibration table
- 2: first X-ray axis
- 3: second X-ray axis
- 4: positioning axis
- 5: supporting rails
- 6: first detector axis
- 7: second detector axis
- 8: rotary stage
- 9: correction axis
- 10: first vertical axis
- 11: first detector
- 12: second vertical axis
- 13: second detector
- 14: panel for hanging the detector
- 15: radial axial bearing
- 16: stepper actuator
- 17: tension spring
- 18: first X-ray tube jack
- 19: first X-ray tube
- 20: device for positioning the filter wheel
- 21: filter wheel
- 22: second X-ray tube jack
- 23: second X-ray tube
- 24: multi-axis apparatus

- X: common axis for the first pair of X-ray tube detectors
- Y: common axis for the second pair of X-ray tube detectors

## Claims

1. A multi-axis apparatus (24) for performing X-ray measurements, particularly computed tomography, comprising a positioning means for moving at least one X-ray tube (19, 23) and at least one detector (11, 13) at opposite ends of a common axis X passing through a rotary stage (8) for pivotally placing the measured object, **characterized in that** it comprises two pairs of X-ray tube (19, 23) and detector (11, 13), wherein the first pair is formed by the first X-ray tube (19) and first detector (11) on the common axis X, and the second pair is formed by the second X-ray tube (23) and the second detector (13) on a common axis Y, wherein the axis Y perpendicularly intersects the axis X, and the positioning means lying in the horizontal plane of axis X and axis Y is formed by a set of mechanical axes (2, 3, 4, 6, 7, 9), wherein the first X-ray tube (19) is arranged with the ability to shift on a first X-ray tube mechanical axis (2) and the second X-ray tube (23) is arranged with the ability to shift on a second X-ray mechanical axis (3), wherein the first and second X-ray mechanical axes (2, 3) are horizontal, non-intersecting and perpendicular to each other, and the first detector (11) is arranged with the ability to shift on a first detector mechanical axis (6), the second detector (13) is arranged with the ability to shift on a horizontal correction mechanical axis (9) parallel with the second X-ray mechanical axis (3), and the correction mechanical axis (9) is arranged with the ability to shift on a second detector mechanical axis (7) equipped with a rotary stage (8) with the ability to shift, wherein the first and second detector mechanical axes (6, 7) are horizontal, parallel to the first X-ray tube mechanical axis (2), and have the ability to shift, and are arranged on a positioning mechanical axis (4) which is parallel with the second X-ray tube mechanical axis (3).

2. A multi-axis apparatus according to claim 1, **characterized in that** the first detector (11) is arranged with the ability to shift on a first vertical axis (10) which is arranged with the ability to shift on the first detector mechanical axis (6), and a second detector (13) is arranged with the ability to shift on a second vertical axis (12) which is arranged with the possibility to shift on the correction mechanical axis (9), wherein the first X-ray tube (19) and second X-ray tube (23) are height adjustable.

3. A multi-axis apparatus according to claim 2, **characterized in that** the detectors (11, 13) are attached to the vertical axes (10, 12) with the ability to tilt from a vertical position using a tilting mechanism.

4. A multi-axis apparatus according to claim 3, **characterized in that** the tilting mechanism of both detectors (11, 13) consists of a radial-axial bearing (15) fixed to the vertical axes (10, 12) and of a panel (14) with mounts for the detectors (11, 13), and of an actuator (16) mounted on the panel (14) for performing the tilting of the detector (11, 13) and of a tension spring (17) to ensure stability and preload of the mechanism of slewing the detector (11, 13).

5. A multi-axis apparatus according to claim 4, **characterized in that** the tilting plates (14) for supporting the detectors (11, 13) are equipped with a attachment for easy replacement of different detector types.

6. A multi-axis apparatus according to at least one of claims 1 to 5, **characterized in that** the X-ray tubes (19, 23) are provided with an auxiliary device (20) with a rotary disc (21) which is equipped with at least one filter for shaping the spectrum of the X-ray beam.

7. A multi-axis apparatus according to at least one of claims 1 to 6, **characterized in that** the rotary stage (8) is height adjustable.

## Patentansprüche

1. Mehrachsige Einrichtung (24) zur Durchführung der Röntgenmessungen vor allem der Computertomografie, welche die Positioniervorrichtung zur Bewegung von mindestens einer Bestrahlungsröhre (19, 23) und von mindestens einem Detektor (11, 13) an den gegenüberliegenden Enden der gemeinsamen Achse X einschließt, die durch den Rotationstisch (8) zur Drehlagerung des gemessenen Objekts durchgeht, **dadurch gekennzeichnet, dass** sie zwei Paare Bestrahlungsröhre (19, 23) und Detektor (11, 13) einschließt, wo das erste Paar durch die erste Bestrahlungsröhre (19) und den ersten Detektor (11) an der gemeinsamen Achse X gebildet ist und wo das zweite Paar durch die zweite Bestrahlungsröhre (23) und den zweiten Detektor (13) an der gemeinsamen Achse Y gebildet ist, wo die Achse Y die Achse X senkrecht schneidet, und die Positioniervorrichtung, die in der horizontalen Ebene der Achsen X und Y liegt, ist durch ein System der Achsen (2, 3, 4, 6, 7, 9) gebildet, wobei die erste Bestrahlungsröhre (19) mit der Möglichkeit der verschiebbaren Bewegung an der ersten Bestrahlungsröhrenachse (2) angebracht ist und die zweite Bestrahlungsröhre (23) mit der Möglichkeit der verschiebbaren Bewegung an der zweiten Bestrahlungsröhrenachse (3) angebracht ist, wo die Bestrahlungsröhrenachsen (2, 3) waagerecht sind, sich nicht schneiden und gegenseitig senkrecht sind, und weiter ist der erste Detektor (11) mit der Möglichkeit der verschiebbaren Bewegung an der ersten Detektorachse (6) angebracht, der zweite Detektor (13) ist mit der Möglichkeit der verschiebbaren Bewegung an der waagerechten Korrekturachse (9) gleichlaufend mit der zweiten Bestrahlungsröhrenachse (3) angebracht und die Korrekturachse (9) ist mit der Möglichkeit der verschiebbaren Bewegung an der zweiten Detektorachse (7) angebracht, die mit dem Rotationstisch (8) mit der Möglichkeit der verschiebbaren Bewegung versehen ist, wo die Detektorachsen (6, 7) waagerecht, mit der ersten Bestrahlungsröhrenachse (2) gleichlaufend sind und mit der Möglichkeit der verschiebbaren Bewegung an der Positionierachse (4) angebracht sind, die mit der zweiten Bestrahlungsröhrenachse (3) gleichlaufend ist.

2. Mehrachsige Einrichtung nach dem Anspruch 1, **dadurch gekennzeichnet, dass** der erste Detektor (11) mit der Möglichkeit der verschiebbaren Bewegung an der ersten senkrechten Achse (10) angebracht ist, die mit der Möglichkeit der verschiebbaren Bewegung an der ersten Detektorachse (6) angebracht ist, und der zweite Detektor (13) mit der Möglichkeit der verschiebbaren Bewegung an der zweiten senkrechten Achse (12) angebracht ist, die mit der Möglichkeit der verschiebbaren Bewegung an der Korrekturachse (9) angebracht ist, wobei die erste Bestrahlungsröhre (19) und die zweite Bestrahlungsröhre (23) höheneinstellbar sind.

3. Mehrachsige Einrichtung nach dem Anspruch 2, **dadurch gekennzeichnet, dass** die Detektoren (11, 13) zu den senkrechten Achsen (10, 12) mit der Möglichkeit des Kippens von der senkrechten Position mit Hilfe eines Befestigungsmechanismus befestigt sind.

4. Mehrachsige Einrichtung nach dem Anspruch 3, **dadurch gekennzeichnet, dass** der Befestigungsmechanismus der beiden Detektoren (11, 13) aus einem Radial-Axial-Lager (15), das zur senkrechten Achse (10, 12) befestigt ist, und aus einer Platte (14) mit Universalgriffen für Detektoren (11, 13), ferner aus einem Aktuator (16), der auf der Platte (14) befestigt ist und der das Kippen des Detektors (11, 13) durchführt, und aus einer Zugfeder (17) zur Absicherung der Stabilität und der Vorspannung des Befestigungsmechanismus des Detektors (11, 13) besteht.

5. Mehrachsige Einrichtung nach dem Anspruch 4, **dadurch gekennzeichnet, dass** die Befestigungsplatten (14) zum Tragen der Detektoren (11, 13) mit der Universalbefestigung zum einfachen Austausch der Typen der Detektoren (11,13) versehen sind.

6. Mehrachsige Einrichtung nach mindestens einem der Ansprüche 1 bis 5, **dadurch gekennzeichnet, dass** die Bestrahlungsröhren (19, 23) mit einer Zusatzvorrichtung (20) mit einer Drehscheibe (21) versehen sind, die mindestens mit einem Filter zum Formen des Spektrums des Röntgenstrahlbündels ausgerüstet ist.

7. Mehrachsige Einrichtung nach einem der Ansprüche 1 bis 6, **dadurch gekennzeichnet, dass** der Rotationstisch (8)

## Revendications

1. Appareil multiaxial (24) pour mesures radiologiques particulèrement en ce qui concerne la tomographie informatique, comprenant un outil de positionnement pour le déplacement d'au moins un tube à rayons X (19, 23) et d'au moins un détecteur (11, 13) aux extrémités oposées de l'axe X, traversant la table rotative (8) pour l'installation rotative de l'objet mesuré, qui **est caractérisé par** deux paires de tubes à rayons X (19, 23) et d'un détecteur (11, 13), ou la première paire est formée par le premier tube à rayons X (19) et le premier détecteur (11) sur un axe X commun, et la deuxième paire est formée par le deuxième tube à rayons X (23) et le deuxième détecteur (13) sur un axe Y commun, où l'axe Y croise verticalement l'axe X et l'outil de positionnement, se situant au niveau horizontal des axes X et Y, est formé par un système d'axes (2, 3, 4, 6, 7, 9), alors que le premier tube à rayons X (19) est installé de manière à pouvoir coulisser sur le premier axe de tube à rayons X (2) et le deuxième tube à rayons X (23) est disposé de manière à pouvoir coulisser sur le deuxième axe de tube à rayons X (3). Quant aux axes des tubes à rayons X (2, 3), ils sont horizontaux, ne se croisent pas et sont orthogonaux l'un à l'autre, ensuite, le premier détecteur (11) est disposé de manière à pouvoir coulisser sur le premier axe de détecteur (6), tandis que le deuxième détecteur (13) est disposé de manière à pouvoir coulisser sur l'axe de correction horizontal (9), parallèle au deuxième axe de tube à rayons X (3). L'axe de correction (9) est disposé avec possibilité de coulisser sur le deuxième axe de détecteur (7), équipé d'une table rotative (8), avec possibilité de coulisser, tandis que les axes de détecteur (6, 7) sont horizontaux, parallèles aux premier axe de tube à rayons X (2) et ils peuvent coulisser sur l'axe de positionnement (4), qui est parallèle au deuxième axe de tube à rayons X (3).

2. Appareil multiaxial d'après l'exigence n°1, qui **est caractérisé par** un premier détecteur (11), qui est installé de manière à pouvoir coulisser sur le premier axe vertical (10), qui est installé de manière à pouvoir coulisser sur le premier axe de détecteur (6). Le deuxième détecteur (13) est installé de manière à pouvoir coulisser sur le deuxième axe vertical (12), qui est installé de manière à pouvoir coulisser sur l'axe de correction (9), alors que le premier tube à rayons X (19) et le deuxième tube à rayons X (23) sont à réglage vertical.

3. Appareil multiaxial d'après l'exigence n°2, qui **est caractérisé par** les détecteurs (11, 13), qui sont fixés aux axes verticaux (10, 12) tout en pouvant pivoter de la position verticale à l'aide d'un mécanisme de fixation.

4. Appareil multiaxial d'après l'exigence n°3, qui **est caractérisé par** le mécanisme de fixation des deux détecteurs (11, 13) qui est composé d'un roulement pour charges mixtes (15), fixé à l'axe vertical (10, 12) est d'un panneau (14) avec des prises universelles pour les détecteurs (11, 13), ensuite, d'un actionneur (16), fixé au panneau (14) effectuant l'inclinaison du détecteur (11, 13), et d'un ressort de traction (17) pour garantir la stabilité et la précontrainte du méchanisme de fixation du détecteur (11, 13).

5. Appareil multiaxial d'après l'exigence n°3, qui **est caractérisé par** les panneaux de fixation (14), supportant les détecteurs (11, 13), qui sont dotées de prises universelles pour un changement faciles de détecteurs de différents gabarits (11, 13).

6. Appareil multiaxial d'après au moins une des exigences de 1 à 5, qui **est caractérisé par** les tubes à rayons X (19, 23), qui sont dotés d'une installation supplémentaire (20) avec un disque tournant (21), qui est muni d'au moins un filtre pour former le spectre du faisceau de rayons X.

7. Appareil multiaxial d'après une des exigences de 1 à 6, qui **est caractérisé par** une table rotative (8) à réglage vertical.
